# EUROPEAN PATENT APPLICATION

(11) **EP 4 403 604 A1**
(43) Date of publication of application: **24.07.2024**
(21) Application number: 24151492.6
(22) Date of filing: 12.01.2024
(51) Int. Cl.: C08L 25/06, C08J 3/14

(54) **POLYMER NANOPARTICLE AND METHOD OF PREPARING SAME**

(30) Priority: 13.01.2023 KR 20230005654
(71) Applicant: Samsung Electronics Co., Ltd., Suwon-si, Gyeonggi-do 16677 (KR); POSTECH Research and Business Development Foundation, Pohang-si, Gyeongsangbuk-do 37673 (KR)
(72) Inventor: KO, Yoon Seok, 16678 Suwon-si (KR); KIM, Dong Pyo, 37673 Pohang-si (KR); JEE, Sang Soo, 16678 Suwon-si (KR); YIM, Se Jun, Hwaseong-si (KR)
(74) Representative: Elkington and Fife LLP

(57) **Abstract**

Provided are a polymer nanoparticle, a method of preparing the polymer nanoparticle, and a polishing slurry including the polymer nanoparticle are provided, where the polymer nanoparticle including a mixture of a hydrophobic polymer and a copolymer including both hydrophobic and hydrophilic groups, the hydrophilic group of the copolymer is disposed on an outer surface of the polymer nanoparticle.

## Description

### FIELD OF THE INVENTION

Polymer nanoparticles having a hydrophilic surface, a method for preparing the nanoparticles, and a polishing slurry containing the nanoparticles are disclosed.

### BACKGROUND OF THE INVENTION

A hydrophobic material is difficult to uniformly disperse in a hydrophilic solvent and/or matrix, such as, for example, water. Yet, according to environmental issues or application areas, there is a demand for a hydrophobic material well dispersed in such hydrophilic solvents and/or matrixes, for example, a polymer containing a hydrophobic group or particles comprising such a polymer. For example, in a chemical mechanical polishing (CMP) process (e.g., for forming a structure with a flat surface in a semiconductor device manufacturing process, polymer nanoparticles are used as a slurry material of polishing slurry using water or a hydrophilic solvent), in biomedical fields, etc.; and polymer nanoparticles which are well dispersed in water or hydrophilic solvent, may advantageously be used. Several methods to produce these polymer nanoparticles have been attempted, but there is a need for polymer nanoparticles that can be manufactured through a simpler process at a lower cost.

### SUMMARY OF THE INVENTION

Some example embodiments provide polymer nanoparticles that are easily prepared at low cost and are well dispersed in hydrophilic solvents.

Some example embodiments provide a method for preparing the polymer nanoparticles.

Some example embodiments provide a polishing slurry including the polymer nanoparticles.

The polymer nanoparticle according to some example embodiments is a polymer nanoparticle that includes a mixture of a hydrophobic polymer and a copolymer including both hydrophobic and hydrophilic groups, wherein the hydrophilic group of the copolymer is disposed on an outer surface of the polymer nanoparticle.

The hydrophobic polymer includes a structural unit represented by Chemical Formula 1, and the copolymer includes a structural unit represented by Chemical Formula 1 and a structural unit represented by Chemical Formula 2.

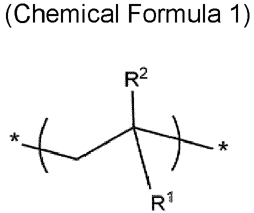

In Chemical Formula 1,
R¹ and R² are each independently hydrogen, a substituted or unsubstituted C1 to C30 saturated or unsaturated aliphatic hydrocarbon group, a substituted or unsubstituted C3 to C30 saturated or unsaturated alicyclic hydrocarbon group, a substituted or unsubstituted C6 to C30 aromatic hydrocarbon group, -(C=O)OR' (wherein, R' is a C1 to C30 alkyl group, a C3 to C10 cycloalkyl group, or a C6 to C10 aryl group), or any combination thereof, and
* is a linking portion; 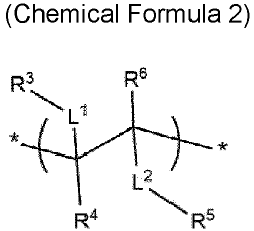
wherein, in Chemical Formula 2,
   R³ and R⁵ are each independently hydrogen, deuterium, a hydroxyl group, an alkoxy group, a carboxyl group, a phosphoric acid group, a sulfonic acid group, an acid metal salt group, an amino group, a cyano group, a nitro group, a pyrrole group, an imidazole group, an imidazolidinyl group, a pyridinyl group, a piperidinyl group, a pyridazinyl group, a pyrimidinyl group, or a piperazinyl group,
   L¹ and L² are each independently a single bond, a substituted or unsubstituted C1 to C10 alkylene group, an oxo group (-O-), a carbonyl group (-C(=O)-), or any combination thereof,
   provided that when L¹ and L² are both single bonds or a substituted or unsubstituted C1 to C10 alkylene groups, R³ and R⁵ are not hydrogen or deuterium,
   R⁴ and R⁶ are each independently hydrogen, a substituted or unsubstituted C1 to C30 saturated or unsaturated aliphatic hydrocarbon group, a substituted or unsubstituted C3 to C30 saturated or unsaturated alicyclic hydrocarbon group, a substituted or unsubstituted C6 to C30 aromatic hydrocarbon group, or any combination thereof, and
   * is a linking portion.

In Chemical Formula 1, one of R¹ and R² is hydrogen, or a substituted or unsubstituted C1 to C30 saturated or unsaturated aliphatic hydrocarbon group, and the other is a substituted or unsubstituted C6 to C30 aromatic hydrocarbon group, or -(C=O)OR' (wherein, R' is a C1 to C30 alkyl group, a C3 to C10 cycloalkyl group, or a C6 to C10 aryl group).

In Chemical Formula 1, one of R¹ and R² is hydrogen, or a substituted or unsubstituted C1 to C10 alkyl group, and the other is a substituted or unsubstituted C6 to C10 aromatic hydrocarbon group, -(C=O)OR' (wherein, R' is a C1 to C10 alkyl group, a C3 to C6 cycloalkyl group, or a C6 aryl group).

In Chemical Formula 1, one of R¹ and R² is hydrogen, or a substituted or unsubstituted C1 to C4 alkyl group, and the other is a substituted or unsubstituted phenyl group, or -(C=O)OR' (wherein, R' is a C1 to C4 alkyl group).

In Chemical Formula 2,
at least one of R³ and R⁵ is a hydroxyl group, a carboxyl group, an alkoxy group, an acid metal salt group, an amino group, a cyano group, a nitro group, a phosphoric acid group, a sulfonic acid group, a pyrrole group, an imidazole group, an imidazolidinyl group, a pyridinyl group, a piperidinyl group, a pyridazinyl group, a pyrimidinyl group, or a piperazinyl group, and
L¹ and L² are each independently a single bond, a substituted or unsubstituted C1 to C10 alkylene group, a carbonyl group (-C(=O)-), or any combination thereof.

In Chemical Formula 2,
at least one of R³ and R⁵ is a hydroxy group, a carboxyl group, an alkoxy group, an acid metal salt group, an amino group, a cyano group, a nitro group, a phosphoric acid group, a sulfonic acid group, a pyridinyl group, or a piperidinyl group; and
L¹ and L² are each independently a single bond, a substituted or unsubstituted C1 to C4 alkylene group, a carbonyl group (-C(=O)-), or any combination thereof.

In Chemical Formula 2,
at least one of R³ and R⁵ is a hydroxy group, a carboxyl group, an alkoxy group, an acid metal salt group, an amino group, a cyano group, a nitro group, or a pyridinyl group; and
L¹ and L² are each independently a single bond, or a substituted or unsubstituted C1 to C4 alkylene group.

In Chemical Formula 2,
R⁴ and R⁶ are each independently hydrogen, a substituted or unsubstituted C1 to C10 alkyl group, a substituted or unsubstituted C3 to C6 cycloalkyl group, a substituted or unsubstituted C6 to C10 aryl group, or any combination thereof.

In Chemical Formula 2,
at least one of R³ and R⁵ is a hydroxy group, an alkoxy group, an acid metal salt group, a carboxyl group, an amino group, a cyano group, or a pyridinyl group,
L¹ and L² are each independently a single bond, or a substituted or unsubstituted C1 to C4 alkylene group, and
at least one of R⁴ and R⁶ is hydrogen or a substituted or unsubstituted C1 to C4 alkyl group.

The hydrophobic polymer includes polystyrene, a substituted or unsubstituted poly (meth)acrylate, or any combination thereof.

The copolymer including both the hydrophilic and hydrophobic groups includes copolymers represented by at least one of Chemical Formulas 2-1 to 2-5: 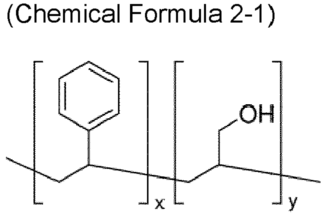 wherein, in Chemical Formula 2-1, x and y are each number of 1 or more; 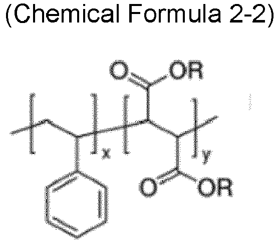
wherein, in Chemical Formula 2-2,
x and y are each number of greater than or equal to 1, and
R is each independently hydrogen or a C1 to C5 alkyl group, provided that at least one R is hydrogen; 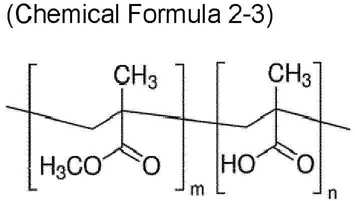
wherein, in Chemical Formula 2-3, m and n are each number of greater than or equal to 1; 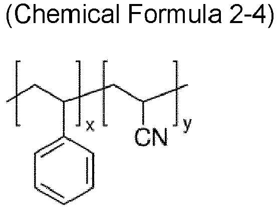
wherein, in Chemical Formula 2-4, x and y are each number of greater than or equal to 1; 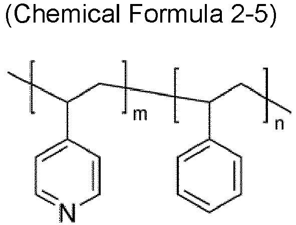
wherein, in Chemical Formula 2-5, m and n are each number of greater than or equal to 1.

A weight ratio of the hydrophobic polymer and the copolymer in the mixture is about 50:50 to about 99: 1.

The weight ratio of the hydrophobic polymer and the copolymer in the mixture is about 50: 50 to about 95: 5.

A molar ratio of the hydrophobic group and the hydrophilic group in the copolymer is about 90: 10 to about 10: 90.

The molar ratio of the hydrophobic group and the hydrophilic group in the copolymer is about 80: 20 to about 20: 80.

An average particle diameter of the polymer nanoparticles is about 10 nm to about 500 nm.

Each weight average molecular weight of the hydrophobic polymer and the copolymer including both hydrophobic and hydrophilic groups is about 1,000 g/mol to about 1,000,000 g/mol.

A method for preparing a polymer nanoparticle according to some example embodiments includes precipitating a mixture of a hydrophobic polymer and a copolymer including both hydrophobic and hydrophilic groups using a high-speed reprecipitation method so that the hydrophilic groups of the copolymer are disposed on a surface of a prepared polymer nanoparticle.

The high-speed reprecipitation method includes a flow chemistry method.

Some example embodiments provide a polishing slurry including polymer nanoparticles according to the embodiment.

The polishing slurry further includes a chelating agent, an oxidizing agent, a surfactant, a dispersant, or any combination thereof.

The polymer nanoparticles according to some example embodiments do not include expensive block copolymers and may be prepared by precipitating the mixture of the hydrophobic polymer and the copolymer including both hydrophobic and hydrophilic groups, so that the production cost is low and the preparing method is also simple. The polymer nanoparticles prepared in this manner can be well dispersed in water or aqueous solvents due to the hydrophilic groups of the copolymer disposed on the surface. Therefore, nanoparticles according to some example embodiments can advantageously be applied in polishing slurry or biomedical fields.

### BRIEF DESCRIPTION OF THE DRAWINGS

FIG. 1 is a schematic view of an apparatus for applying flow chemistry method according to some example embodiments.
FIG. 2 is an enlarged view of the injection port through which a solution is injected in the apparatus of FIG. 1.
FIG. 3 is a schematic view showing the flow states of two liquids depending on the flow rate of the liquid through the inner flow path and the flow rate of the liquid through the outer flow path among the injection ports of FIG. 2, and actual image photographs of each figure.
FIG. 4 is a graph showing the results of calculating Reynolds number for linear rate ratio (R) using THF as a solvent and water as an anti-solvent.
FIG. 5 is a graph showing EDD (Engulfment, Deformation, and Diffusion model) mixing time versus Reynolds number calculated in FIG. 4.
FIG. 6 is a graph showing average particle sizes and polydispersity indexes of polymer nanoparticles prepared using each solvent when polymer nanoparticles are prepared according to one example by dissolving the polymer mixture in ethanol, methanol, and THF at a concentration of 0.1 mg/ml, respectively.
FIG. 7 is a graph showing average particle sizes and polydispersity indexes of polymer nanoparticles prepared using each solvent when polymer nanoparticles are prepared according to one example by dissolving the polymer mixture in ethanol, methanol, and THF at a concentration of 1 mg/ml, respectively.
FIG. 8 is a graph showing the change in size and polydispersity index of polymer nanoparticles according to the concentration of the polymer mixture when polymer nanoparticles are prepared by changing the concentration of the polymer mixture in THF.
FIG. 9 is a graph showing the particle sizes of the polymer nanoparticles prepared according to volume ratios of methanol in the mixed solvent when polymer nanoparticles are prepared using a mixed solvent of THF and methanol.
FIG. 10 is a graph showing the polydispersity index (PDI, (standard deviation/mean)^2) of particle sizes of the polymer nanoparticles prepared according to volume ratios of methanol in the mixed solvent when polymer nanoparticles are prepared using a mixed solvent of THF and methanol.
FIG. 11 is a graph showing the particle sizes of the polymer nanoparticles prepared according to volume ratios of acetone in the mixed solvent when polymer nanoparticles are prepared using a mixed solvent of THF and acetone.
FIG. 12 is a graph showing the polydispersity indexes of particle sizes of the polymer nanoparticles prepared according to volume ratios of acetone in the mixed solvent when polymer nanoparticles are prepared using a mixed solvent of THF and acetone.
FIG. 13 is a graph showing the change in zeta potential according to the ratio of poly(styrene-maleic acid) (PMSA) copolymer of polymer nanoparticles according to one example prepared from a mixture of polystyrene and poly(styrene-maleic acid) copolymer.
FIG. 14 is a photograph showing water dispersions of polystyrene nanoparticles (right) and nanoparticles prepared from a mixture of polystyrene and poly(styrene-allyl alcohol) copolymer (left).
FIG. 15 is a graph showing the transmittance (top graph) and intensity of scattered beam (bottom graph) of water containing polystyrene nanoparticles over time.
FIGS. 16 to 18 are graphs showing the changes in transmittance (T) over time (top graph) and the change in intensity of scattered beam (BS) over time (bottom graph) after dispersing polymer nanoparticles prepared from a mixture of polystyrene and a poly(styrene-allyl alcohol) copolymer at a weight ratio of 9:1, 8:2, and 5:5, respectively, in a solvent.
FIGS. 19 to 21 are graphs showing the changes in transmittance (T) over time (top graph) and the change in intensity of scattered beam (BS) over time (bottom graph) after dispersing polymer nanoparticles prepared from a mixture of polystyrene and a poly(styrene-maleic acid) copolymer at a weight ratio of 9:1, 8:2, and 5:5, respectively, in a solvent.

### DETAILED DESCRIPTION OF THE EMBODIMENTS

Hereinafter, embodiments of the present disclosure are described in detail. However, these embodiments are exemplary, the present disclosure is not limited thereto and the present disclosure is defined by the scope of claims.

As used herein, when a definition is not otherwise provided, "substituted" refers to replacement of a hydrogen by a C1 to C30 alkyl group; a C1 to C10 alkylsilyl group; a C3 to C30 cycloalkyl group; a C6 to C30 aryl group; a C2 to C30 heteroaryl group; a C1 to C10 alkoxy group; a fluoro group or C1 to a C10 trifluoroalkyl group, such as a trifluoromethyl group; or a cyano group.

As used herein, when a definition is not otherwise provided, "combination thereof" means that two or more substituents are combined with a linking group, or two or more substituents are combined by condensation.

As used herein, when a definition is not otherwise provided, the term "alkyl group" may refer to a "saturated alkyl group" without a double bond or a triple bond, or an "unsaturated alkyl group" including at least one of an alkenyl group or an alkynyl group. The "alkenyl group" may refer to a substituent in which at least two carbon atoms are bound with at least one carbon-carbon double bond, and the "alkynyl group" refers to a substituent in which at least two carbon atoms are bound with at least one carbon-carbon triple bond. The alkyl group may be a branched, linear, or cyclic alkyl group.

The alkyl group may be a C1 to C30 alkyl group, for example, a C1 to C20 alkyl group, a C1 to C10 alkyl group, or a C1 to C4 alkyl group.

For example, a C1 to C4 alkyl may have 1 to 4 carbon atoms, and may be selected from methyl, ethyl, propyl, iso-propyl, n-butyl, iso-butyl, sec-butyl, and t-butyl.

Examples of the alkyl group may include a methyl group, an ethyl group, a propyl group, an isopropyl group, a butyl group, an isobutyl group, a t-butyl group, a pentyl group, a hexyl group, an ethenyl group, a propenyl group, a butenyl group, a cyclopropyl group, a cyclobutyl group, a cyclopentyl group, a cyclohexyl group, and the like.

The "aromatic group" may refer to a substituent including a cyclic structure where all elements have p-orbitals which form conjugation. An aryl group and a heteroaryl group may be exemplified.

The "aryl group" may refer to a monocyclic or fused ring-containing polycyclic (i.e., rings sharing adjacent pairs of carbon atoms) groups.

The "heteroaryl group" may refer to one including 1 to 3 heteroatoms selected from N, O, S, or P in an aryl group, and remaining carbons. When the heteroaryl group is a fused ring, each ring may include 1 to 3 heteroatoms.

Hereinafter, polymer nanoparticles and a method of preparing the same according to some example embodiments will be described.

The polymer nanoparticles according to some example embodiments include a mixture of a hydrophobic polymer and a copolymer including both hydrophobic and hydrophilic groups (hereinafter, also referred to as simply "copolymer"), and the hydrophilic group of the copolymer is disposed on the surface of the polymer nanoparticles.

By having hydrophilic groups on the surface of the polymer nanoparticles, the particles can be well dispersed without aggregating even in water or hydrophilic solvents. Therefore, the polymer nanoparticles according to some example embodiments may advantageously be used in various fields that use water or hydrophilic solvents. These fields may include, for example, the production of polishing slurries to form structures with flat surfaces in semiconductor manufacturing processes, and/or various biomedical fields for the production of in vivo drug delivery systems or biological materials, but are limited to thereto. For example, in at least one embodiment, the nanoparticle may encapsulate a drug compound and/or compound configured to be broken down to a drug compound.

In order to modify a surface of a polymer to be hydrophilic, a block copolymer including a hydrophilic group and a hydrophobic group may be used; after synthesizing a hydrophobic polymer having a hydrophilic group, a method of removing the hydrophobic group of the polymer using external energy may be used; and/or introducing a hydrophilic group into the polymer using a high-pressure gas phase reactor may be used. These methods are dangerous using high-pressure reactions, require the use of expensive block copolymers, or use external energy that requires complex and/or difficult processes. Accordingly, there is a need for a method of preparing polymer nanoparticles with a hydrophilic surface using a cheaper and simpler method, and for polymer nanoparticles prepared by such a method that are well dispersed in hydrophilic solvents, etc.

The present inventors have developed polymer nanoparticles that are hydrophilic by having hydrophilic groups disposed on the surface of the polymer nanoparticles, which are obtained from a mixture including a hydrophobic polymer and a copolymer including hydrophobic and hydrophilic groups. In the polymer nanoparticles according to some example embodiments, unlike polymer nanoparticles prepared by a conventional block copolymer including a hydrophilic group and a hydrophobic group, the hydrophobic polymer and the copolymer including both hydrophobic and hydrophilic groups are included in the nanoparticles in a simply mixed state without chemical bonding or additional polymerization reaction. In addition, the copolymer including both hydrophobic and hydrophilic groups does not need to be a block copolymer, and therefore can be prepared at a low cost using a random copolymer in which the hydrophobic group and the hydrophilic group are randomly arranged.

Furthermore, the nanoparticles may be prepared by simply mixing the hydrophobic polymer and the copolymer including both hydrophobic and hydrophilic groups, and then reprecipitating the mixture in a hydrophilic solvent and/or water in which it is not easily dispersed, using, e.g., a high-speed reprecipitation method such as flow chemistry method.

The reprecipitation method is performed after synthesis of a compound or polymer, or simultaneously with the synthesis reaction, by contacting the prepared compound and/or polymer with an anti-solvent in which the compound or polymer does not dissolve, so that the compound or polymer may be precipitated in the anti-solvent to separate the compound and/or polymer. In addition, high-speed reprecipitation is a method of quickly performing reprecipitation. For example, the final product may be prepared with a small particle size by quickly contacting a compound or polymer with an anti-solvent using methods such as centrifugation or a flow chemistry method. Among these, for example, in the flow chemistry method, the contact between the compound and/or polymer and the anti-solvent does not occur within a fixed reactor such as a flask, but in a fluid state that moves through the interior of a channel or tube at a specific speed. For example, this is a method in which a solution including the polymer and a fluid containing an anti-solvent for the polymer contact each other while moving at a constant speed, so that contact can occur more quickly and uniformly through a wider contact surface. Accordingly, the polymer precipitated through the contact may be separated into fine sizes and formed into nanoparticles. In addition, the flow rate of the solution including the polymer and the anti-solvent, the concentration of the polymer in the solution containing the polymer, and/or the type and mixing ratio of the solvent forming the solution or anti-solvent may be adjusted, and thereby, the size and/or polydispersity index (PDI, (standard deviation/mean)^2) of the polymer nanoparticles prepared therefrom may be adjusted. The above takes advantage of a principle wherein the polymer nanoparticles that are well dispersed in a hydrophilic solvent (e.g., due to a hydrophilic group disposed on a surface of the polymer nanoparticles) may be prepared from a mixture of a hydrophobic polymer and a copolymer including both hydrophobic and hydrophilic groups by using the flow chemistry method.

Meanwhile, polymer nanoparticles according to some example embodiments may advantageously be prepared through flow chemistry method as an example of the above-described high-speed reprecipitation (or precipitation) method, but the present disclosure is not limited to the flow chemistry method as an example of high-speed reprecipitation method. It will be appreciated that polymer nanoparticles according to some example embodiments can be prepared through any other reprecipitation method using the same principle.

The polymer nanoparticles according to some example embodiments may be prepared as follows: through a high-speed reprecipitation method, such as a flow chemistry method, a mixture of simply a hydrophobic polymer and a copolymer containing both hydrophobic and hydrophilic groups rapidly contacts an anti-solvent (e.g., water), in a fluid state and precipitates, the hydrophobic polymer and the hydrophobic group moieties of the copolymer having both hydrophobic and hydrophilic groups are aggregated into the interior of the polymer mixture, while the hydrophilic groups included in the copolymer are disposed on the outer surface of the polymer mixture in contact with water to prepare nanoparticles that are uniformly dispersed without aggregating in water. The polymer nanoparticles prepared in this way may be applied to the desired application as is, or can be separated using a filter or the like and then redispersed in a desired hydrophilic solvent.

For example, polymer nanoparticles according to some example embodiments may be prepared by a simple method of simply mixing the hydrophobic polymer and the copolymer including the hydrophobic and hydrophilic groups and precipitating the mixture using a high-speed reprecipitation method.

In the polymer nanoparticles according to some example embodiments, the hydrophobic polymer includes a structural unit represented by Chemical Formula 1, and the copolymer including hydrophobic and hydrophilic groups includes a structural unit represented by Chemical Formula 1 and a structural unit represented by Chemical Formula 2: 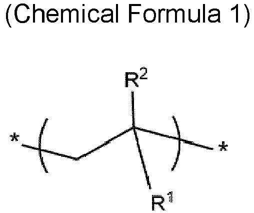 wherein, in Chemical Formula 1,
R¹ and R² are each independently hydrogen, a substituted or unsubstituted C1 to C30 saturated or unsaturated aliphatic hydrocarbon group, a substituted or unsubstituted C3 to C30 saturated or unsaturated alicyclic hydrocarbon group, a substituted or unsubstituted C6 to C30 aromatic hydrocarbon group, -(C=O)OR' (wherein, R' is a C1 to C30 alkyl group, a C3 to C10 cycloalkyl group, or a C6 to C10 aryl group), or any combination thereof, and
* is a linking portion; 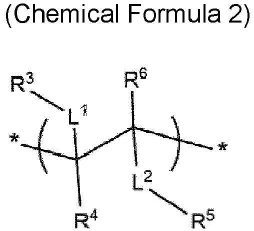
wherein, in Chemical Formula 2,
   R³ and R⁵ are each independently hydrogen, deuterium, a hydroxy group, an alkoxy group, a carboxyl group, a phosphoric acid group, a sulfonic acid group, an acid metal salt group, an amino group, a cyano group, a nitro group, a pyrrole group, an imidazole group, an imidazolidinyl group, a pyridinyl group, a piperidinyl group, a pyridazinyl group, a pyrimidinyl group, or a piperazinyl group,
   L¹ and L² are each independently a single bond, a substituted or unsubstituted C1 to C10 alkylene group, an oxo group (-O-), a carbonyl group (-C(=O)-), or any combination thereof,
   provided that when L¹ and L² are both single bonds or a substituted or unsubstituted C1 to C10 alkylene groups, R³ and R⁵ are not hydrogen or deuterium,
   R⁴ and R⁶ are each independently hydrogen, a substituted or unsubstituted C1 to C30 saturated or unsaturated aliphatic hydrocarbon group, a substituted or unsubstituted C3 to C30 saturated or unsaturated alicyclic hydrocarbon group, a substituted or unsubstituted C6 to C30 aromatic hydrocarbon group, or any combination thereof, and
   * is a linking portion.

In Chemical Formula 1, one of R¹ and R² may be hydrogen, or a substituted or unsubstituted C1 to C30 saturated or unsaturated aliphatic hydrocarbon group, and the other may be a substituted or unsubstituted C6 to C30 aromatic hydrocarbon group, or -(C=O)OR' (wherein, R' is a C1 to C30 alkyl group, a C3 to C10 cycloalkyl group, or a C6 to C10 aryl group). For example, in Chemical Formula 1, one of R¹ and R² may be hydrogen or a substituted or unsubstituted C1 to C10 alkyl group, and the other may be a substituted or unsubstituted C6 to C10 aromatic hydrocarbon group, -(C=O)OR ' (where R' is a C1 to C10 alkyl group, a C3 to C6 cycloalkyl group, or a C6 aryl group).

In some example embodiments, in Chemical Formula 1, one of R' and R² is hydrogen, or a substituted or unsubstituted C1 to C4 alkyl group, and the other is a substituted or unsubstituted phenyl group, or -(C=O)OR' (wherein, R' is a C1 to C4 alkyl group), for example, one of R¹ and R² is hydrogen and the other is a substituted or unsubstituted phenyl group, such as an unsubstituted phenyl group, or one of R¹ and R² is a methyl group, and the other is -(C=O)OR', where R' may be a C1 to C4 alkyl group, for example, a methyl group.

In some example embodiments, when one of R¹ and R² in Chemical Formula 1 is hydrogen and the other is a substituted or unsubstituted phenyl group, for example, an unsubstituted phenyl group, Chemical Formula 1 may have a structural unit of polystyrene, and when one of R¹ and R² is a methyl group, and the other is -(C=O)OR', for example, R' is a methyl group, Chemical Formula 1 may have a structural unit of polymethyl methacrylate.

In Chemical Formula 2, at least one of R³ and R⁵ may be a hydroxy group, an alkoxy group, a carboxyl group, a phosphoric acid group, a sulfonic acid group, an acid metal salt group, an amino group, a cyano group, a nitro group, a pyrrole group, an imidazole group, an imidazolidinyl group, a pyridinyl group, a piperidinyl group, a pyridazinyl group, a pyrimidinyl group, or a piperazinyl group, for example, at least one of R³ and R⁵ may be a hydroxy group, an alkoxy group, a carboxyl group, an amino group, a cyano group, a nitro group, a phosphoric acid group, a sulfonic acid group, an acid metal salt group, a pyridinyl group, a piperidinyl group, a pyridazinyl group, a pyrimidinyl group, or a piperazinyl group, for example, at least one of R³ and R⁵ may be a hydroxy group, an alkoxy group, a carboxyl group, an amino group, a cyano group, a nitro group, a phosphoric acid group, a sulfonic acid group, an acid metal salt group, a pyridinyl group, or a piperidinyl group, for example, at least one of R³ and R⁵ may be a hydroxy group, an alkoxy group, a carboxyl group, an amino group, a cyano group, a nitro group, or a pyridinyl group, and for example, at least one of R³ and R⁵ may be a hydroxy group, an alkoxy group, a carboxyl group, an amino group, a cyano group, or a pyridinyl group.

In Chemical Formula 2, L¹ and L² may each independently be a single bond, a substituted or unsubstituted C1 to C10 alkylene group, a carbonyl group (-C(=O)-), or any combination thereof, for example, L¹ and L² may each independently be a single bond, a substituted or unsubstituted C1 to C4 alkylene group, a carbonyl group (-C(=O)-), or any combination thereof, and for example, L¹ and L² may each independently be a single bond, or a substituted or unsubstituted C1 to C4 alkylene group.

In Chemical Formula 2, R⁴ and R⁶ may each independently be hydrogen, a substituted or unsubstituted C1 to C10 alkyl group, a substituted or unsubstituted C3 to C6 cycloalkyl group, a substituted or unsubstituted C6 to C10 aryl group, or any combination thereof, for example, at least one of R⁴ and R⁶ may be hydrogen, or a substituted or unsubstituted C1 to C10 alkyl group, and for example, at least one of R⁴ and R⁶ may be hydrogen, or a substituted or unsubstituted C1 to C4 alkyl group.

In some example embodiments, in Chemical Formula 2, at least one of R³ and R⁵ may be a hydroxy group, an alkoxy group, a carboxyl group, an acid metal salt group, an amino group, a cyano group, or a pyridinyl group, L¹ and L² may each independently be a single bond, or a substituted or unsubstituted C1 to C4 alkylene group, and at least one of R⁴ and R⁶ may be hydrogen, or a substituted or unsubstituted C1 to C4 alkyl group.

When at least one of R³ and R⁵ in Chemical Formula 2 has the same group as above, the group represented by Chemical Formula 2 may have hydrophilicity.

In some example embodiments, the copolymer including a hydrophobic structural unit represented by Chemical Formula 1 and a hydrophilic structural unit represented by Chemical Formula 2 may be represented by at least one of Chemical Formulas 2-1 to 2-5: 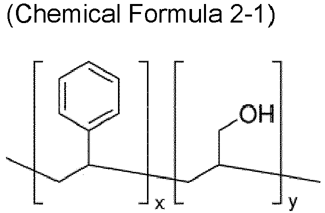 wherein, in Chemical Formula 2-1, x and y are each number of greater than or equal to 1; 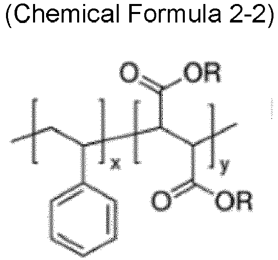 wherein, in Chemical Formula 2-2,
x and y are each number of greater than or equal to 1, and
R is each independently hydrogen or a C1 to C5 alkyl group, provided that at least one R is hydrogen; 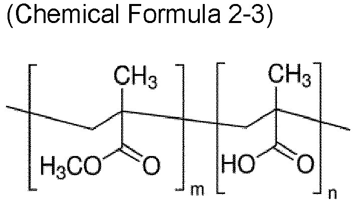
wherein, in Chemical Formula 2-3, m and n are each number of greater than or equal to 1; 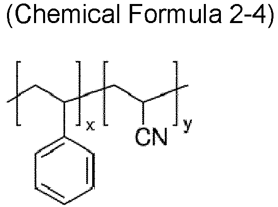
wherein, in Chemical Formula 2-4, x and y are each number of greater than or equal to 1; 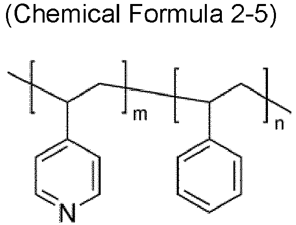
wherein, in Chemical Formula 2-5, m and n are each number of greater than or equal to 1.

A weight ratio of the hydrophobic polymer and the copolymer constituting the polymer nanoparticles according to some example embodiments, may be within a range of about 99:1 to about 50:50. For example weight ratio of the hydrophobic polymer and the copolymer constituting the polymer nanoparticles may be about 50 to 99: about 50 to 1, for example, about 50 to 90: about 50 to 10, about 50 to 85: about 50 to 15, about 50 to 80: about 50 to 20, about 50 to 75: about 50 to 25, about 50 to 70: about 50 to 30, about 50 to 65: about 50 to 35, about 50 to 60: about 50 to 40, or about 50:50, but is not limited thereto.

The weight ratio of the hydrophobic polymer and the copolymer may vary depending on the type of specific polymer and copolymer forming them, the size of the polymer nanoparticle to be prepared, the type and mixing ratio of the solvent and anti-solvent used, etc., and a person skilled in the art can appropriately adjust the weight ratio of the hydrophobic polymer and the copolymer according to the desired purpose within the scope of the present disclosure.

In addition, the molar ratio of hydrophobic groups and hydrophilic groups in the copolymer may be about 90 to 10: about 10 to 90, for example, about 85 to 15: about 15 to 80, about 80 to 20: about 20 to 80, about 75 to 25: about 25 to 75, about 70 to 30: about 30 to 70, about 65 to 35: about 35 to 60, about 60 to 40: about 40 to 60, about 55 to 45: about 45 to 55, or about 50:50, but is not limited thereto.

When the molar ratio of hydrophobic groups and hydrophilic groups in the copolymer is within the above range, polymer nanoparticles prepared from a mixture of the hydrophobic polymer and the copolymer have hydrophilic groups disposed on their surfaces and can be well dispersed in a hydrophilic solvent.

Each weight average molecular weight of the hydrophobic polymer and the copolymer may range from about 1,000 g/mol to about 1,000,000 g/mol. For example, each weight average molecular weight of the hydrophobic polymer, and the copolymer may be about 1,000 g/mol to about 900,000 g/mol, about 1,000 g/mol to about 800,000 g/mol, about 1,000 g/mol to about 500,000 g/mol, about 1,000 g/mol to about 300,000 g/mol, about 1,000 g/mol to about 250,000 g/mol, about 1,000 g/mol to about 200,000 g/mol, about 1,000 g/mol to about 150,000 g/mol, about 1,000 g/mol to about 100,000 g/mol, about 1,500 g/mol to about 500,000 g/mol, about 1,500 g/mol to about 300,000 g/mol, about 2,000 g/mol to about 300,000 g/mol, about 2,000 g/mol to about 200,000 g/mol, about 2,000 g/mol to about 150,000 g/mol, about 2,000 g/mol to about 100,000 g/mol, about 2,000 g/mol to about 90,000 g/mol, about 2,000 g/mol to about 85,000 g/mol, about 2,000 g/mol to about 80,000 g/mol, about 2,000 g/mol to about 75,000 g/mol, about 2,000 g/mol to about 70,000 g/mol, about 2,500 g/mol to about 500,000 g/mol, about 2,500 g/mol to about 300,000 g/mol, about 2,500 g/mol to about 200,000 g/mol, about 2,500 g/mol to about 150,000 g/mol, about 2,500 g/mol to about 100,000 g/mol, about 2,500 g/mol to about 90,000 g/mol, about 2,500 g/mol to about 80,000 g/mol, about 3,000 g/mol to about 500,000 g/mol, about 3,000 g/mol to about 400,000 g/mol, about 3,000 g/mol to about 300,000 g/mol, about 3,000 g/mol to about 200,000 g/mol, about 3,000 g/mol to about 100,000 g/mol, about 3,000 g/mol to about 90,000 g/mol, about 3,000 g/mol to about 80,000 g/mol, about 3,000 g/mol to about 70,000 g/mol, about 3,000 g/mol to about 60,000 g/mol, about 3,000 g/mol to about 50,000 g/mol, about 5,000 g/mol to about 500,000 g/mol, about 5,000 g/mol to about 400,000 g/mol, or about 5,000 g/mol to about 300,000 g/mol, about 5,000 g/mol to about 200,000 g/mol, about 5,000 g/mol to about 100,000 g/mol, about 10,000 g/mol to about 500,000 g/mol, about 10,000 g/mol to about 400,000 g/mol, or about 10,000 g/mol to about 300,000 g/mol, about 10,000 g/mol to about 200,000 g/mol, about 10,000 g/mol to about 100,000 g/mol, but is not limited thereto.

The weight average molecular weight of the hydrophobic polymer and the copolymer may vary depending on the type of polymer and copolymer constituting each, the size of the polymer nanoparticle to be prepared, the type and flow rate of the solvent and anti-solvent used, etc., and the desired purpose and may be selected appropriately.

The size of the polymer nanoparticle according to some example embodiments may be easily adjusted for a desired purpose (or criteria) by appropriately selecting the type of polymer and copolymer constituting the polymer nanoparticle, the weight ratio between them, the content of the hydrophilic group included in the copolymer, and in the method for preparing polymer nanoparticles according to the above-described embodiment, various factors that can be considered. For example, an average particle diameter of the polymer nanoparticle may be about 10 nm to about 500 nm, for example, about 10 nm to about 450 nm, about 10 nm to about 400 nm, about 10 nm to about 350 nm, about 10 nm to about 300 nm, about 10 nm to about 250 nm, about 10 nm to about 200 nm, about 30 nm to about 500 nm, about 30 nm to about 400 nm, about 30 nm to about 350 nm, about 30 nm to about 300 nm, about 30 nm to about 250 nm, about 30 nm to about 200 nm, about 30 nm to about 150 nm, about 50 nm to about 500 nm, about 50 nm to about 450 nm, about 50 nm to about 400 nm, about 50 nm to about 350 nm, about 50 nm to about 300 nm, about 50 nm to about 250 nm, about 50 nm to about 200 nm, about 50 nm to about 150 nm, about 100 nm to about 500 nm, about 100 nm to about 450 nm, about 100 nm to about 400 nm, about 100 nm to about 350 nm, about 100 nm to about 300 nm, about 100 nm to about 250 nm, or about 100 nm to about 200 nm, but is not limited thereto.

As seen from the examples described later, the size of the polymer nanoparticles according to some example embodiments may be within the desired ranges by adjusting types of the solvent for forming a polymer solution including the polymer and the copolymer, wherein the solvent may consist of two or more solvents, a mixing ratio of the two or more solvents, a concentration of the polymer compound in the solution, and each flow rate of the solution and an anti-solvent contacting therewith may be controlled to secure the size of the polymer nanoparticles within the desired ranges.

For example, the polymer nanoparticles may be manufactured to have a desired size and/or polydispersity index by selecting the polymer and the copolymer comprising the polymer nanoparticles, selecting the solvent and the anti-solvent from a solvent candidate group dissolving them and an anti-solvent candidate group, wherein when the solvent and the anti-solvent are used alone or mixed, concentrations of the polymer and the copolymer, types of the solvents, each solvent content in the mixed solvent, each flow rate of the solvent and the anti-solvent, and the like may be changed to manufacture polymer nanoparticles. Afterwards, upon measuring an average particle diameter and/or polydispersity index of the polymer nanoparticles prepared, a combination of the solvents, a concentration of the polymer, a mixing ratio of the mixed solvent, each flow rate of a solution including the polymer mixture and the anti-solvent, and the like may be determined to prepare polymer nanoparticles having desired average size and/or polydispersity index thereof. This process may easily be set and selected by a person skilled in the art by referring to examples described later.

The polymer nanoparticles according to some example embodiments may be controlled to have polydispersity index (PDI) of less than about 0.25, for example, less than or equal to about 0.20, less than or equal to about 0.19, less than or equal to about 0.15, less than or equal to about 0.13, less than or equal to about 0.10, less than or equal to about 0.08, less than or equal to about 0.05, less than or equal to about 0.03, or less than or equal to about 0.02, and greater than 0. For example, the polydispersity index may be greater than or equal to about 0.01 and less than about 0.25, greater than or equal to about 0.02 and less than or equal to about 0.23, greater than or equal to about 0.03 and less than or equal to about 0.20, greater than or equal to about 0.05 and less than or equal to about 0.20, greater than or equal to about 0.07 and less than about 0.25, greater than or equal to about 0.10 and less than or equal to about 0.20, greater than or equal to about 0.02 and less than or equal to about 0.18, or greater than or equal to about 0.03 and less than or equal to about 0.15, but is not limited to these ranges.

The polymer nanoparticles according to some example embodiments, which have polydispersity index within the ranges, may be manufactured to have a uniform particle size. As described above, the polydispersity index of the polymer nanoparticles like the size of the polymer nanoparticles may vary depending on the concentration of the solution including the polymer and the copolymer, types of the solvent, each flow rate of the polymer solution and the anti-solvent, and the like, which may be controlled by a person skilled in the art to easily manufacture the polymer nanoparticles having polydispersity index within the desired ranges.

On the other hand, whether or not a hydrophilic group of the copolymer is disposed on a surface of the polymer nanoparticles according to some example embodiments may be determined by dispersing the prepared polymer nanoparticles in water and/or another hydrophilic solvent and checking whether or not the polymer nanoparticles are aggregated. When the polymer nanoparticles are aggregated in the solvent, the aggregated polymer nanoparticles may be gathered and located in a portion of the solvent. For example, when the polymer nanoparticles have lower density than the solvent, aggregates of the polymer nanoparticles float on the upper surface of the solvent, but when the density of the polymer nanoparticles are larger than that of the solvent, the aggregates of the polymer nanoparticles settle down to the bottom of the solvent. Herein, the corresponding solvent exhibits no constant transmittance depending on a depth of the solvent from the surface to the bottom, wherein the transmittance rapidly drops where the aggregates of the polymer nanoparticles are gathered, while kept to be high at the rest of the solvent where there are less or no aggregates. On the contrary, when the polymer nanoparticles are not aggregated but uniformly dispersed in a solvent, the transmittance of the corresponding solvent uniformly reduces from the upper surface to the bottom of the solvent, which may make it appear cloudy, compared to a solvent that does not contain the polymer nanoparticles. When the polymer nanoparticles according to some example embodiments, which are manufactured in examples described later, are dispersed in water, the transmittance of the water containing the polymer nanoparticles decreases at a constant ratio.

Another method of checking whether or not the hydrophilic group is disposed on a surface of the polymer nanoparticles is to measure a zeta potential (or ζ-potential) of the polymer nanoparticles. For example, polystyrene, which is hydrophobic, has a zeta potential of about -21 mV. However, polymer nanoparticles prepared from a mixture of the polystyrene and a copolymer including both a hydrophilic group and a hydrophobic group according to some example embodiments may have a reduced zeta potential of about -40 mV. In other words, in cases wherein the hydrophilic group is disposed on the surface of the polymer nanoparticles, the zeta potential is reduced.

On the other hand, the polymer nanoparticles according to some example embodiments, through a method of additionally binding another group to the hydrophilic group disposed on a surface of the nanoparticles, and the like, may easily be modified into different polymer nanoparticles from the original ones. These polymer nanoparticles should also be understood as falling within the scope of the polymer nanoparticles according to some example embodiments.

As described above, the polymer nanoparticles according to some example embodiments have hydrophilic group disposed on a surface thereof, may uniformly disperse in water or a hydrophilic solvent rather than aggregated, and thus, applied to various fields requiring such dispersion. For example, polishing slurry used in a semiconductor manufacturing process may belong to the various fields. According to some example embodiments, the polishing slurry may include the polymer nanoparticles according to some example embodiments.

The polishing slurry may further include components included in common polishing slurry in addition to the polymer nanoparticles according to some example embodiments. Such components may include, for example, a chelate agent, an oxidizing agent, a surfactant, a dispersant, etc., and the polishing slurry according to some example embodiments may further include one or more thereof.

Hereinafter, an example of preparing polymer nanoparticles according to some example embodiments will be described through examples. However, these examples are only for illustrative purposes and should not be construed as limiting the scope of the present disclosure to these examples.

### Examples

### 1. Determination of fluid flow rate for flow chemistry applications

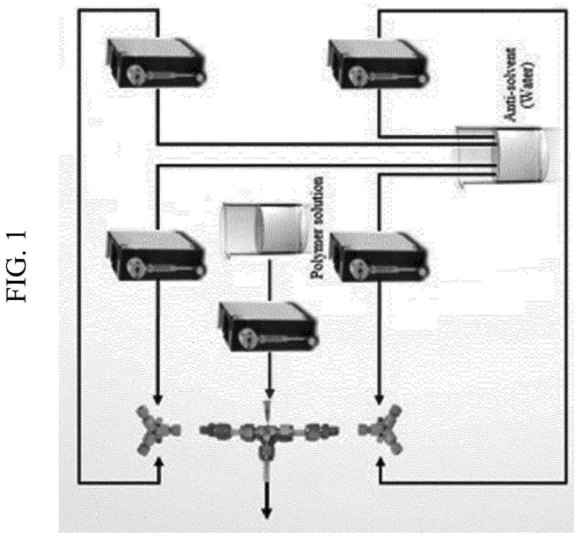

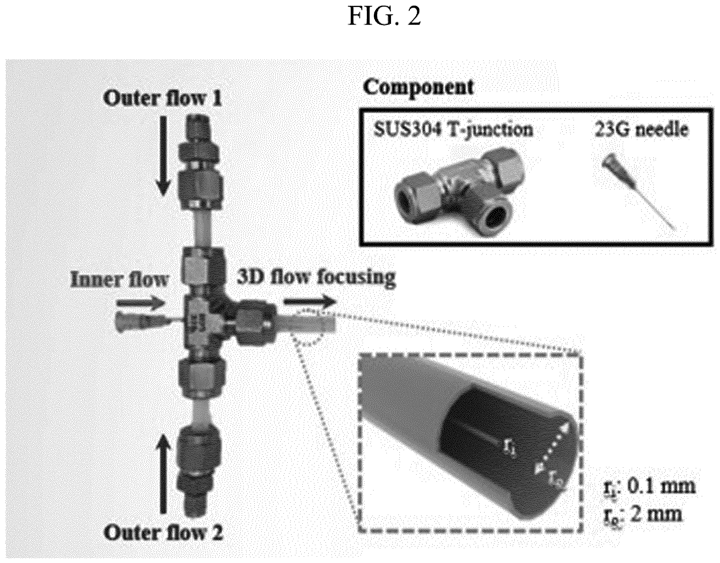

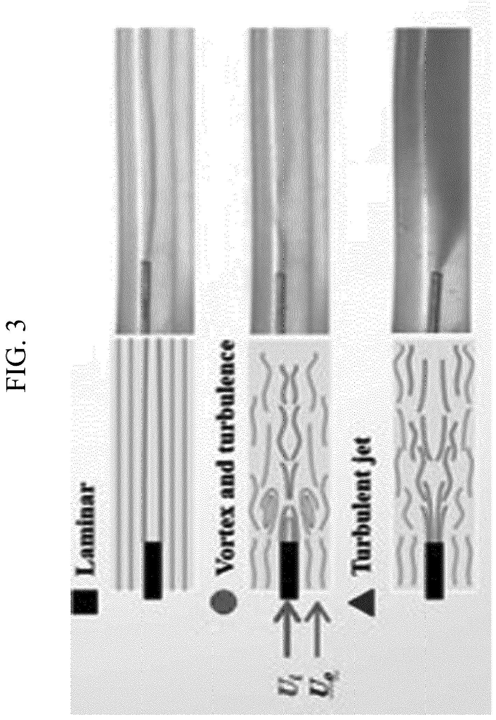

An apparatus shown in FIG. 1 is used to apply a flow chemistry method. Specifically, into a solution injection port (e.g., SUS304 T-junction) of the apparatus of FIG. 1, which is shown as an enlarged view of FIG. 2, a polymer solution is injected through an inner flow path with a radius of 0.1 mm (e.g., 23G needle), while water is injected into other injection ports perpendicularly to the solution injection port for injecting the polymer solution and disposed at both sided of the solution injection port. The injected water passes through a flow path with a radius of about 2 mm surrounding the inner flow path passing through which the polymer solution is injected. Herein, FIG. 3 shows a schematic diagram and a directly taken photograph of a cross-section of a side of the apparatus where the polymer solution and the water flow at each flow rate through the inner flow path and the outer flow path.

Referring to the top image of FIG. 3, the polymer solution inside flows parallel to the water outside in a layered form, the middle image of FIG. 3 shows that the polymer solution inside passes, while causing turbulences, and the bottom image of FIG. 3 shows that the polymer solution is mixed into the external water layer and passes, while causing turbulences. The shape shown in the bottom image of FIG. 3 is called to be a turbulent jet, and the polymer mixture solution described in examples may contact the water layer, while generating such a turbulence jet, to form polymer nanoparticles according to some example embodiments.

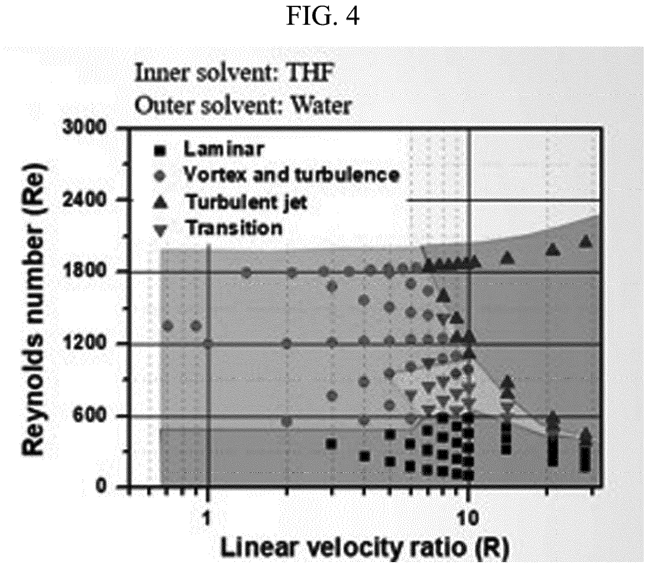

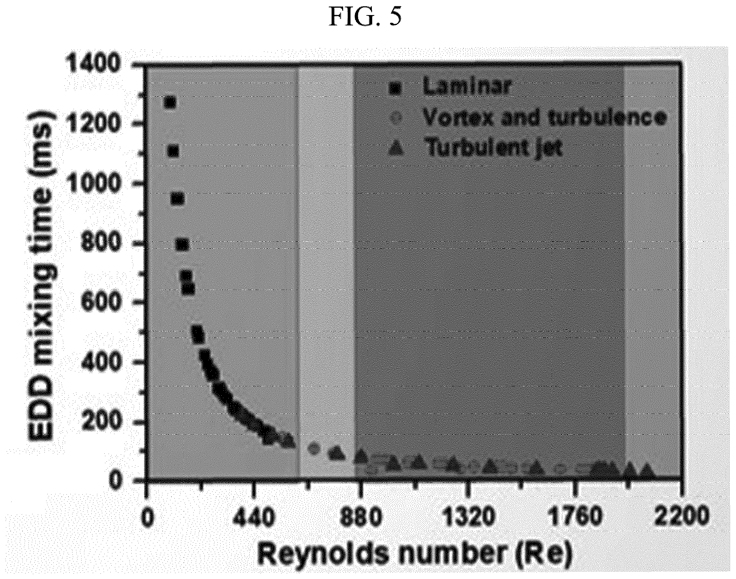

In other words, each flow rate of the polymer solution and the water may be changed to check changes of the fluid flows shown in FIG. 3, and conditions for generating such a jet turbulence as shown in FIG. 3 may be determined by calculating, e.g., a Reynolds number. Herein, a graph of FIG. 4 shows changes in the Reynolds number showing each flow of FIG. 3 relative to a flow rate (linear velocity ratio: R) when THF is used as a solvent. In addition, a graph of FIG. 5 shows EDD (Engulfment, Deformation, and Diffusion model) mixing time (milli seconds) according to the Reynolds number of FIG. 4.

Based on the calculation results, after setting each flow rate of the liquids through the inner flow path and the outer flow path to check whether or not the turbulence jet is actually formed, the experiment proceeds.

Referring to FIG. 4 and FIG. 5, when the polymer solution passing through the inner flow path is set at a flow rate of 10 ml/min, while the water passing through the outer flow path is set at a flow rate of 254 ml/min, the Reynolds number reaches 1848, which confirms that the turbulence is formed.

### 2. Preparation of mixtures of hydrophobic polymers and copolymers including both hydrophobic and hydrophilic groups

Polystyrene (a weight average molecular weight 280,000 g/mol, Sigma-Aldrich Co., Ltd.) as a hydrophobic polymer and a poly(styrene-allyl alcohol) copolymer (a weight average molecular weight: 2,200 g/mol, Sigma-Aldrich Co., Ltd.) as a copolymer including both hydrophobic and hydrophilic groups are mixed in a weight ratio of 1:1 to prepare a mixture, which is used to prepare polymer nanoparticles having an average size of about 100 nm and polydispersity index of 0.1 to 0.2. The poly(styrene-allyl alcohol) copolymer is a product of copolymerization of styrene and allyl alcohol in a mole ratio of 60 : 40.

### 3. Solvent settings for polymer mixture

In order to determine a solvent for the polymer mixture, a Hansen Solubility parameter case is used. In other words, after listing anti-solvent candidates and good solvent candidates according to a target polymer, tetrahydrofuran (THF) is selected as a first solvent according to the Reynolds number.

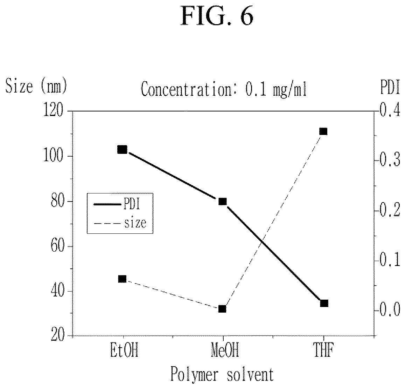

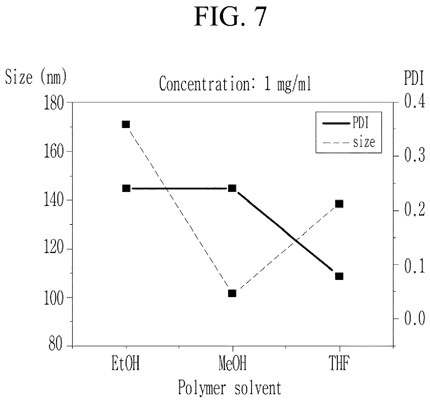

Specifically, after selecting ethanol, methanol, and tetrahydrofuran as the solvent candidate materials, the polymer mixture is respectively dissolved therein at a concentration of 0.1 mg/ml or 1 mg/ml, and the device of FIG. 1 is set at an inner flow rate of 10 ml/min for the solution, and also, at an outer flow rate of 250 ml/min for water as an anti-solvent to carry out a reaction. The results are shown as graphs of FIGS. 6 and 7. In other words, as a result of using THF as a solvent for the polymer mixture, when the polymer mixture is dissolved at a concentration of 0.1 mg/ml, polymer nanoparticles having the largest particle size but the lowest polydispersity index are obtained. On the contrary, at a concentration of 1 mg/ml of the polymer mixture, when the ethanol is used, the largest particle size is obtained, but when THF is used, polymer nanoparticles with an appropriate size and the lowest polydispersity index are obtained. In conclusion, when the polymer mixture is used to manufacture polymer nanoparticles having an appropriate size and low polydispersity index, THF may be appropriate as a first solvent.

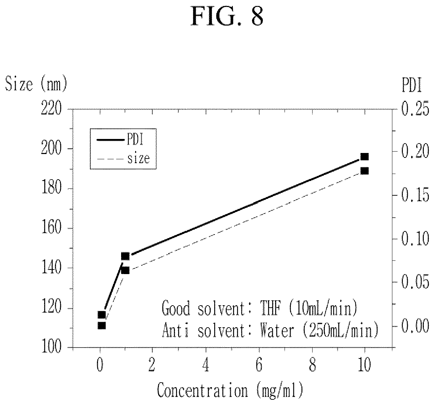

On the other hand, while gradually increasing the concentration of the polymer mixture in THF to10 mg/ml, polymer nanoparticles are manufactured by using the device of FIG. 1 set at the inner flow rate of 10 mL/min and the outer flow rate of 250 mL/min, and the sizes and polydispersity indexes of the prepared polymer nanoparticles are measured. The results are shown in FIG. 8. Referring to FIG. 8, as the concentration of the polymer mixture is increased, the size of the polymer nanoparticle increases, and polydispersity index thereof also increases.

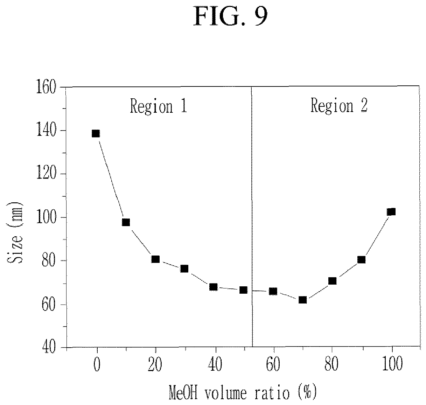

On the other hand, when a mixed solvent of the first solvent with methanol or acetone as a second solvent is used to manufacture polymer nanoparticles, the polymer nanoparticles are measured with respect to a size and polydispersity index according to a combination of the solvents and a ratio of their combination, and the results are shown as graphs of FIGS. 9 to 12. In the experiments, the concentration of the polymer mixture is 1 mg/ml, and the inner flow rate and the outer flow rate are the same as described above.

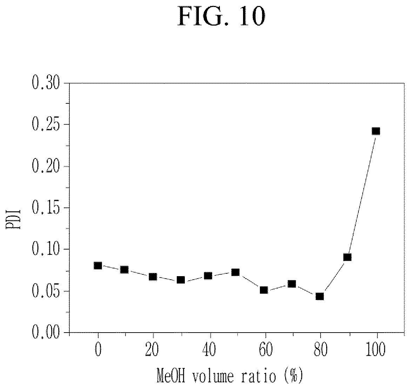

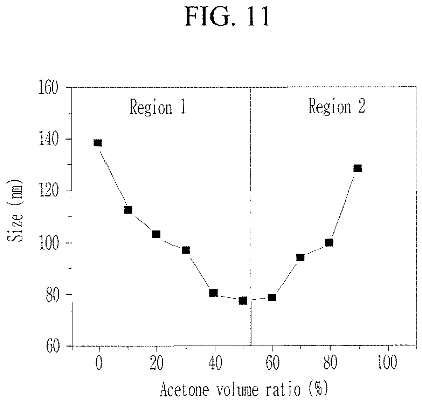

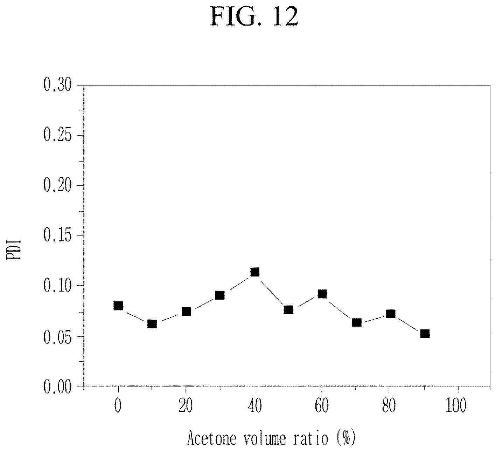

Referring to FIGS. 9 and 11, when THF and methanol, or THF and acetone are respectively mixed in a volume ratio of about 1:1, the polymer nanoparticles have the smallest size, but the larger ratio of either one of THF or methanol, or THF or acetone, the larger size of the polymer nanoparticles. In addition, referring to FIG. 10, when methanol is mixed with THF, as a content of methanol is increased in a volume ratio of greater than about 80%, polydispersity index of the particles rapidly increases. However, referring to FIG. 12, when acetone is mixed with THF, the polydispersity index exhibits no large change according to a content of the acetone but keeps overall low. In other words, when acetone is used, the polymer nanoparticles are prepared to have a varying size according to a ratio of THF and acetone, but the polymer nanoparticles exhibit a more uniform size within the entire size range. In addition, since acetone is a more environmentally-friendly solvent than methanol, the acetone may be determined as the second solvent.

In the above experiments, the solution of the polymer mixture at a concentration of 1 mg/ml was reacted at an inner flow rate of 10 ml/min for 60 minutes, and 0.6 g of polymer nanoparticles per hour were obtained.

### 4. Confirmation of surface hydrophilicity of polymer nanoparticles

### (1) Measurement of zeta potential

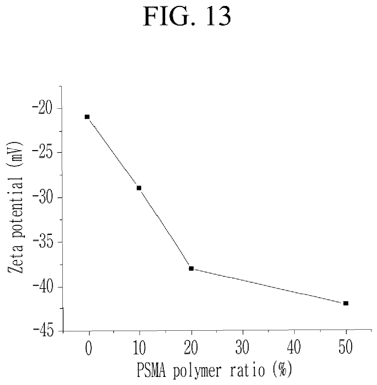

The polymer nanoparticles according to some example embodiments are checked with respect to surface hydrophilicity by measuring a zeta potential. Specifically, while changing a mixing ratio (weight ratio) of polystyrene (a weight average molecular weight: 280,000 g/mol, Sigma-Aldrich Co., Ltd.) and poly(styrene-maleic acid) copolymer (a weight average molecular weight: 65,000 g/mol, Sigma-Aldrich Co., Ltd.), polymer nanoparticles prepared therefrom are checked with respect to a zeta potential, and the results are shown as a graph of FIG. 13. The poly(styrene-maleic acid) copolymer is a product of copolymerization of styrene and maleic anhydride in a mole ratio of 50 : 50.

As shown from FIG. 13, the polystyrene, which includes no hydrophilic poly(styrene-maleic acid) copolymer, has a zeta potential of -21 mV, but as a content of the poly(styrene-maleic acid) copolymer increases, the zeta potential decreases. In view of change of the zeta potential, it is confirmed that a hydrophilic group is disposed on the surface of the polymer nanoparticles prepared from the mixture of the polymer and the copolymer.

### (2) Measurement of transmittance of polymer nanoparticle solution

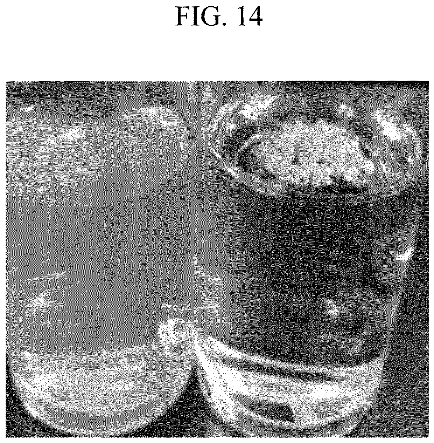

When nanoparticles including polystyrene alone and the nanoparticles manufactured from the polymer mixture according to the example are dispersed in water, the nanoparticles manufactured from the polymer mixture are uniformly dispersed in the water and appear cloudy overall (a left photograph of FIG. 14), but the polystyrene nanoparticles including polystyrene alone are not dispersed in the water but aggregated on the upper surface (a right photograph of FIG. 14). Accordingly, the water in which the nanoparticles including polystyrene alone are included appears clear and transparent at a lower portion in which the polystyrene nanoparticles are not present.

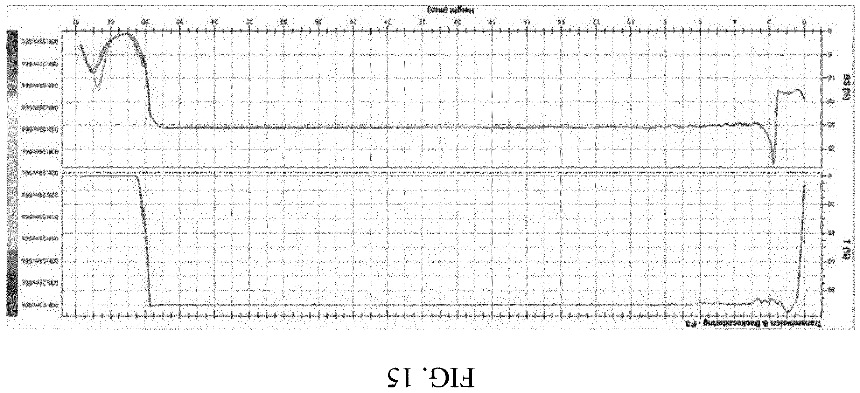

FIG. 15 shows graphs of a transmittance change of the solution including the nanoparticles including polystyrene alone over time (a top graph) and an intensity change of scattered beam (a bottom graph). Referring to the top graph of FIG. 15, i.e., the graph of transmittance changes over time, the water including the polystyrene nanoparticles maintains high transmittance regardless of the time. In addition, the bottom graph of FIG. 15, that is, the graph of intensity change of scattered beam over time also shows high scattered beam intensity (BS).

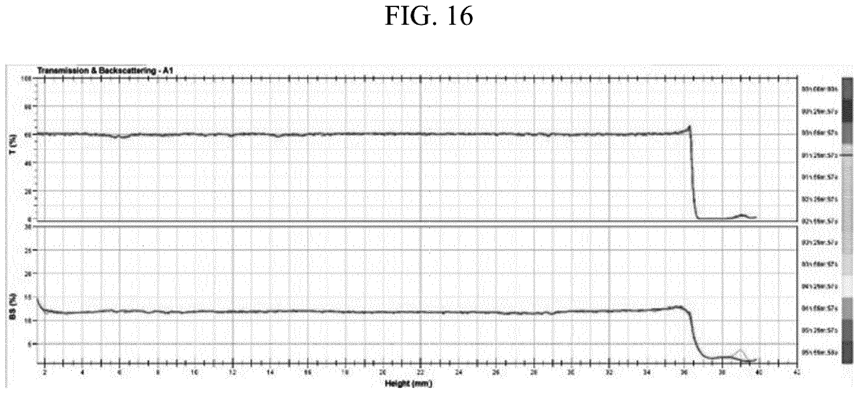

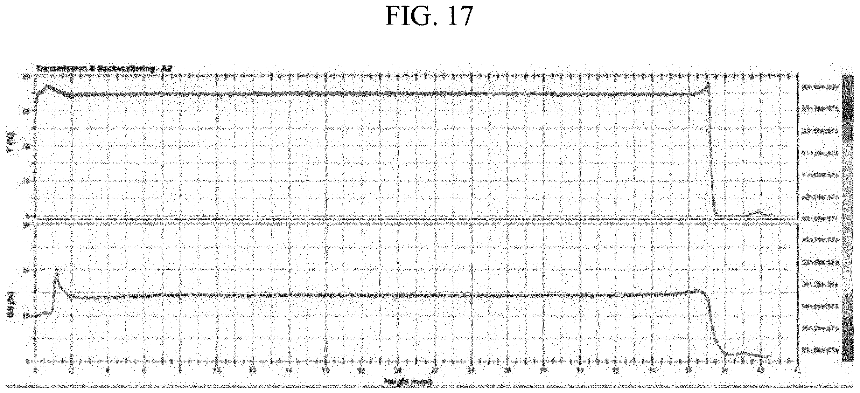

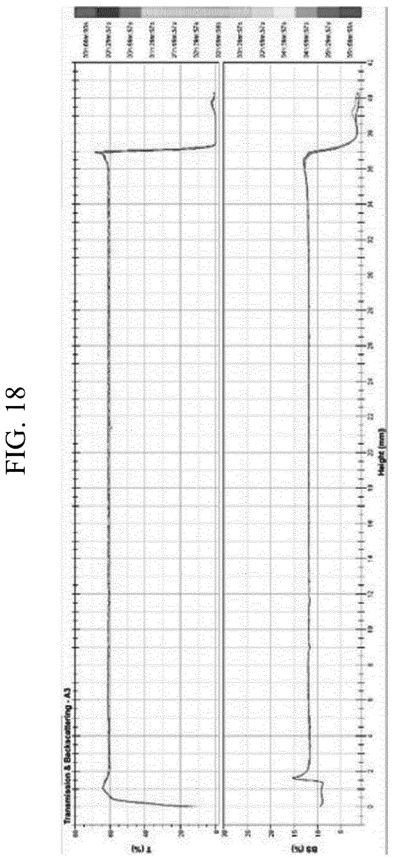

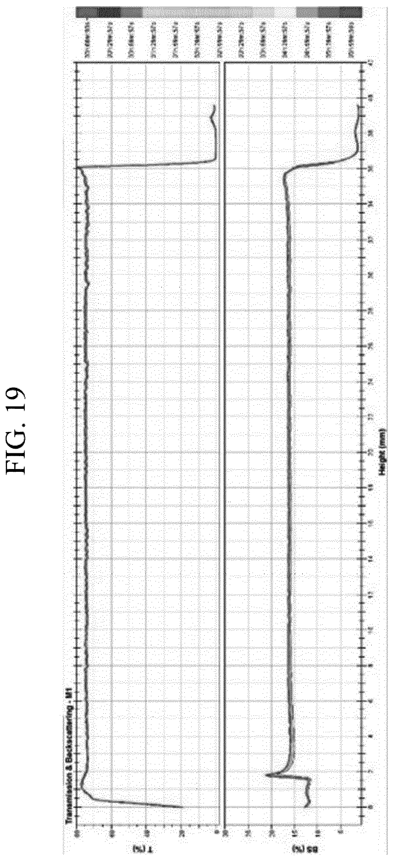

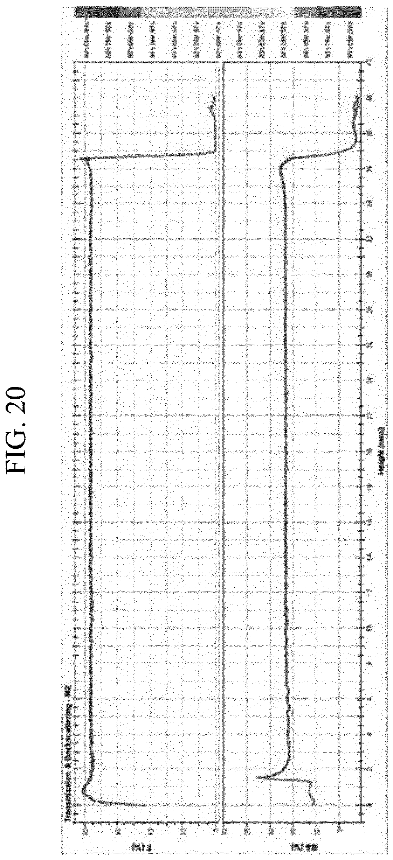

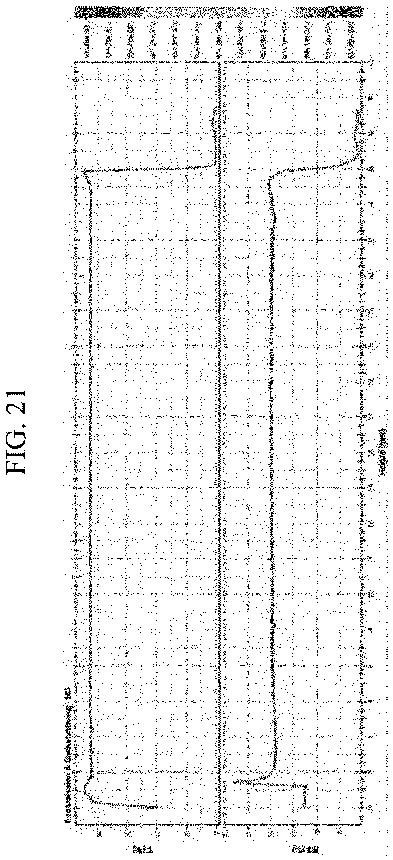

On the contrary, FIGS. 16 to 18 sequentially show graphs of transmittance (T) and scattered beam intensity (BS) over time of dispersion obtained by dispersing polymer nanoparticles prepared by changing the mixing ratio of the mixture of polystyrene and poly(styrene-allyl alcohol) copolymer, respectively, into a weight ratio of 9:1, 8:2, and 5:5 in water. In addition, the polymer nanoparticles prepared by changing a mixing ratio of polystyrene and a poly(styrene-maleic acid) copolymer into a weight ratio 9:1, 8:2, and 5:5 are respectively dispersed in water, and transmittance (T) and scattered beam intensity (BS) of the obtained dispersion are sequentially shown as each graph of FIGS. 19 to 21. Referring to the graphs, the dispersion of the polymer nanoparticles manufactured from the mixture of the polymer according to some example embodiments (each top graph of FIGS. 16 to 21) exhibits lower transmittance than the solution including nanoparticles including polystyrene alone (the top graph of FIG. 15), and in addition, the graphs showing scattered beam intensity (each bottom graph of FIGS. 16 to 21) show lower BS intensity than the bottom graph of FIG. 15. In addition, as a result of performing Turbiscan measurements for these solvents for 6 hours, a dispersion state is well maintained with neither aggregation nor precipitation.

In conclusion, the polymer nanoparticles manufactured from the polymer mixtures according to some example embodiments are uniformly well dispersed in hydrophilic solvents and stably maintain a dispersion state.

Although the present disclosure has been described in detail through examples, the scope of the present disclosure is not limited to the above examples and is determined by the claims set forth below.

## Claims

1. A polymer nanoparticle, comprising
a mixture of a hydrophobic polymer and a copolymer comprising both hydrophobic and hydrophilic groups, wherein the hydrophilic group of the copolymer is disposed on an outer surface of the polymer nanoparticle.

2. The polymer nanoparticle of claim 1, wherein the hydrophobic polymer comprises a structural unit represented by Chemical Formula 1, and the copolymer comprises a structural unit represented by Chemical Formula 1 and a structural unit represented by Chemical Formula 2: 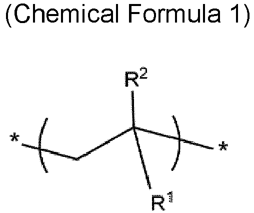 wherein, in Chemical Formula 1,
R¹ and R² are each independently hydrogen, a substituted or unsubstituted C1 to C30 saturated or unsaturated aliphatic hydrocarbon group, a substituted or unsubstituted C3 to C30 saturated or unsaturated alicyclic hydrocarbon group, a substituted or unsubstituted C6 to C30 aromatic hydrocarbon group, -(C=O)OR' (wherein, R' is a C1 to C30 alkyl group, a C3 to C10 cycloalkyl group, or a C6 to C10 aryl group), or any combination thereof, and
* is a linking portion; 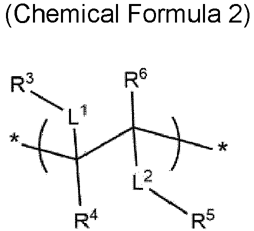
wherein, in Chemical Formula 2,
R³ and R⁵ are each independently hydrogen, deuterium, a hydroxy group, an alkoxy group, a carboxyl group, a phosphoric acid group, a sulfonic acid group, an acid metal salt group, an amino group, a cyano group, a nitro group, a pyrrole group, an imidazole group, an imidazolidinyl group, a pyridinyl group, a piperidinyl group, a pyridazinyl group, a pyrimidinyl group, or a piperazinyl group,
L¹ and L² are each independently a single bond, a substituted or unsubstituted C1 to C10 alkylene group, an oxo group (-O-), a carbonyl group (-C(=O)-), or any combination thereof,
provided that when L¹ and L² are both single bonds or a substituted or unsubstituted C1 to C10 alkylene groups, R³ and R⁵ are not hydrogen or deuterium,
R⁴ and R⁶ are each independently hydrogen, a substituted or unsubstituted C1 to C30 saturated or unsaturated aliphatic hydrocarbon group, a substituted or unsubstituted C3 to C30 saturated or unsaturated alicyclic hydrocarbon group, a substituted or unsubstituted C6 to C30 aromatic hydrocarbon group, or any combination thereof, and
* is a linking portion.

3. The polymer nanoparticle of claim 2, wherein in Chemical Formula 1, one of R¹ and R² is hydrogen, or a substituted or unsubstituted C1 to C30 saturated or unsaturated aliphatic hydrocarbon group, and the other is a substituted or unsubstituted C6 to C30 aromatic hydrocarbon group, or - (C=O)OR' (wherein, R' is a C1 to C30 alkyl group, a C3 to C10 cycloalkyl group, or a C6 to C10 aryl group);
preferably wherein in Chemical Formula 1, one of R¹ and R² is hydrogen or a substituted or unsubstituted C1 to C10 alkyl group, and the other is a substituted or unsubstituted C6 to C10 aromatic hydrocarbon group, or - (C=O)OR' (where R' is a C1 to C10 alkyl group, a C3 to C6 cycloalkyl group, or a C6 aryl group);
preferably wherein in Chemical Formula 1, one of R¹ and R² is hydrogen, or a substituted or unsubstituted C1 to C4 alkyl group, and the other is a substituted or unsubstituted phenyl group, or -(C=O)OR' (wherein, R' is a C1 to C4 alkyl group).

4. The polymer nanoparticle of claims 2 or 3, wherein in Chemical Formula 2, at least one of R³ and R⁵ is a hydroxy group, a carboxyl group, an alkoxy group, an amino group, a cyano group, a nitro group, a phosphoric acid group, a sulfonic acid group, an acid metal salt group, a pyrrole group, an imidazole group, an imidazolidinyl group, a pyridinyl group, a piperidinyl group, a pyridazinyl group, a pyrimidinyl group, or a piperazinyl group, and
L¹ and L² are each independently a single bond, a substituted or unsubstituted C1 to C10 alkylene group, a carbonyl group (-C(=O)-), or any combination thereof.

5. The polymer nanoparticle of any of claims 2-4, wherein in Chemical Formula 2, at least one of R³ and R⁵ is a hydroxy group, a carboxyl group, an alkoxy group, an amino group, a cyano group, a nitro group, a phosphoric acid group, a sulfonic acid group, an acid metal salt group, a pyridinyl group, or a piperidinyl group, and
L¹ and L² are each independently a single bond, a substituted or unsubstituted C1 to C4 alkylene group, a carbonyl group (-C(=O)-), or any combination thereof.

6. The polymer nanoparticle of any of claims 2-5, wherein in Chemical Formula 2, at least one of R³ and R⁵ is a hydroxyl group, a carboxyl group, an alkoxy group, an acid metal salt group, an amino group, a cyano group, a nitro group, or a pyridinyl group, and
L¹ and L² are each independently a single bond, or a substituted or unsubstituted C1 to C4 alkylene group.

7. The polymer nanoparticle of any of claims 2-6, wherein in Chemical Formula 2, R⁴ and R⁶ are each independently hydrogen, a substituted or unsubstituted C1 to C10 alkyl group, a substituted or unsubstituted C3 to C6 cycloalkyl group, a substituted or unsubstituted C6 to C10 aryl group, or any combination thereof.

8. The polymer nanoparticle of any of claims 2-7, wherein in Chemical Formula 2, at least one of R³ and R⁵ is a hydroxy group, a carboxyl group, an alkoxy group, an acid metal salt group, an amino group, a cyano group, or a pyridinyl group,
L¹ and L² are each independently a single bond, or a substituted or unsubstituted C1 to C4 alkylene group, and
at least one of R⁴ and R⁶ is hydrogen, or a substituted or unsubstituted C1 to C4 alkyl group.

9. The polymer nanoparticle of any of claims 1-8, wherein the hydrophobic polymer comprises polystyrene, a substituted or unsubstituted poly (meth)acrylate, or any combination thereof.

10. The polymer nanoparticle of any of claims 1-9, wherein the copolymer comprising both the hydrophilic and hydrophobic groups comprises at least one copolymer represented by Chemical Formulas 2-1 to 2-5: 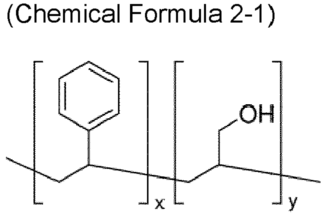 wherein, in Chemical Formula 2-1, x and y are each number of greater than or equal to 1; 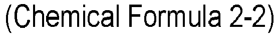 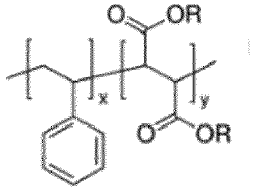 wherein, in Chemical Formula 2-2,
x and y are each number of greater than or equal to 1, and
R is each independently hydrogen or a C1 to C5 alkyl group, provided that at least one R is hydrogen; 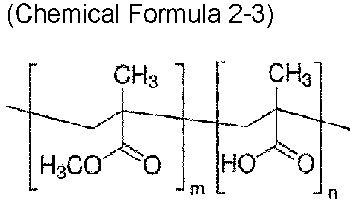
wherein, in Chemical Formula 2-3, m and n are each number of greater than or equal to 1; 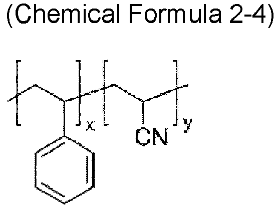
wherein, in Chemical Formula 2-4, x and y are each number of greater than or equal to 1; 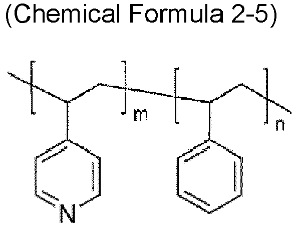
wherein, in Chemical Formula 2-5, m and n are each number of greater than or equal to 1.

11. The polymer nanoparticle of any of claims 1-10, wherein a weight ratio of the hydrophobic polymer and the copolymer in the mixture is 50: 50 to 99: 1; and/or
wherein a molar ratio of the hydrophobic group and the hydrophilic group in the copolymer is 90: 10 to 10: 90; and/or
wherein an average particle diameter of the polymer nanoparticle is 10 nm to 500 nm.

12. The polymer nanoparticle of any of claims 1-11, wherein each weight average molecular weight of the hydrophobic polymer and the copolymer comprising both hydrophobic and hydrophilic groups is 1,000 g/mol to 1,000,000 g/mol.

13. A method of preparing a polymer nanoparticle that comprises a mixture of a hydrophobic polymer and a copolymer comprising both hydrophobic and hydrophilic groups, the hydrophilic group of the copolymer is disposed on a surface of the polymer nanoparticle, the method comprising:
precipitating a mixture of a hydrophobic polymer and a copolymer comprising both hydrophobic and hydrophilic groups by using a high-speed reprecipitation method.

14. The method of claim 13, wherein the high-speed reprecipitation method comprises a flow chemistry method.

15. A polishing slurry comprising the polymer nanoparticle of any of claims 1-12;
preferably further comprising a chelating agent, an oxidizing agent, a surfactant, a dispersant, or any combination thereof.
